# EUROPÄISCHE PATENTSCHRIFT

(11) **EP 0 523 505 B1**
(45) Veröffentlichungstag und Bekanntmachung des Hinweises auf die Patenterteilung: **10.05.1995**
(21) Anmeldenummer: 92111443.5
(22) Anmeldetag: 06.07.1992
(51) Int. Cl.: B62J 9/00

(54) **Befestigungseinrichtung für eine Satteltasche**
Attachment means for a pannier
Moyens de fixation d'une sacoche

(30) Priorität: 15.07.1991 DE 4123422
(43) Veröffentlichungstag der Anmeldung: 20.01.1993
(73) Patentinhaber: DEUTER SPORT UND LEDER GMBH, D-86156 Augsburg (DE)
(72) Erfinder: Heckmair, Andreas, W-8980 Oberstdorf (DE); Kullmann, Bernd, W-8902 Neusäss (DE)
(74) Vertreter: von Puttkamer, Nikolaus, Dipl.-Ing. Patentanwälte Haft, von Puttkamer Berngruber, Czybulka

(56) Entgegenhaltungen:
- EP-A- 0 417 419
- DE-B- 1 161 773
- FR-A- 1 129 612
- GB-A- 658 128
- NL-A- 92 785

## Beschreibung

Die vorliegende Erfindung betrifft eine Befestigungseinrichtung für eine Satteltasche nach dem Oberbegriff des Patentanspruches 1.

Aus der EP-0 417 419 A2 ist eine Befestigungseinrichtung zur Befestigung einer Fahrradsatteltasche unter dem Sattel bekannt. Die Satteltasche wird durch diese Befestigungseinrichtung und ein zusätzliches Klettverschlußband festgehalten. Ein Problem besteht dabei darin, daß vom Sattel über die Befestigungseinrichtung auf die Satteltasche übertragene Schwingungen dazu führen können, daß das an der Satteltasche befestigte Befestigungsteil der Befestigungseinrichtung infolge dieser Schwingungen sich von der Satteltasche zu lösen beginnt, wobei die gesamte Satteltasche beschädigt wird.

Die Aufgabe der vorliegenden Erfindung besteht daher darin, eine Befestigungseinrichtung für eine Satteltasche so auszugestalten, daß eine Beschädigung der Satteltasche bzw. ein Ablösen des an der Satteltasche angeordneten Befestigungsteiles der Befestigungseinrichtung weitgehenst vermieden wird.

Diese Aufgabe wird durch eine Befestigungseinrichtung für eine Satteltasche der eingangs genannten Art gelöst, die durch die in dem kennzeichnenden Befestigungsteil des Patentanspruches 1 angegebenen Merkmale gekennzeichnet ist.

Der wesentliche Vorteil der vorliegenden Befestigungseinrichtung besteht darin, daß sie eine schnelle und einfache Befestigung bzw. Abnahme der Satteltasche mit einem Griff ermöglicht und daß gleichzeitig die Satteltasche durch die Befestigungseinrichtung so am Sattel gehalten wird, daß das an der Satteltasche befindliche Befestigungsteil der Befestigungseinrichtung in Bezug auf das am Sattel befestigte Befestigungselement der Befestigungseinrichtung um eine Querachse relativ frei schwingen kann, so daß eine Beschädigung im Verbindungsbereich des an der Satteltasche angeordneten Befestigungsteiles vermieden wird.

Durch diese möglichen freien Schwingungen der Satteltasche wird vorteilhafterweise automatisch erreicht, daß der Schwerpunkt der bepackten Satteltasche unter die in Querrichtung verlaufende Schwenkachse gelangt.

Vorteilhafterweise kann die Satteltasche aufgrund einer Ausgestaltung der Befestigungseinrichtung mit einem Handgriff am Sattel angeklipst werden. Zur Abnahme der Satteltasche ist es lediglich erforderlich ein Hebelteil des am Sattel angeordneten Befestigungselements der Befestigungseinrichtung zu betätigen und die Satteltasche abzunehmen.

Vorteilhafterweise sind die einzelnen Teile der vorliegenden Befestigungseinrichtung in einer einfachen Weise aus Kunststoff herstellbar, wobei das am Sattel angeordnete Befestigungselement, das permanent am Sattel verbleibt, in einer einfachen Weise durch Festziehen einer Schraube an den Rahmenteilen des Sattels befestigt wird. Vorzugsweise wird das an der Satteltasche angeordnete Befestigungsteil einfach an der Satteltasche vernäht, verschraubt oder vernietet.

Weitere vorteilhafte Ausgestaltungen der Erfindung gehen aus den Unteransprüchen hervor.

Im folgenden werden die Erfindung und deren Ausgestaltungen im Zusammenhang mit den Figuren näher erläutert. Es zeigen:
- Fig. 1: eine schematische Darstellung, die die Anordnung und den Aufbau der vorliegenden Befestigungseinrichtung zeigt;
- Fig. 2 und 3: Darstellungen zur Erläuterung der Funktion der vorliegenden Befestigungseinrichtung;
- Fig. 4 bis 7: Darstellungen zur Erläuterung des Aufbaues des an der Satteltasche angeordneten Befestigungsteiles der Befestigungseinrichtung;
- Fig. 8 bis 10: Darstellungen zur Erläuterung des am Sattel zu montierenden Befestigungselements der Befestigungseinrichtung und
- Fig. 11 bis 13: ein Halteteil, mit dem das am Sattel zu montierende Befestigungselement montiert wird.

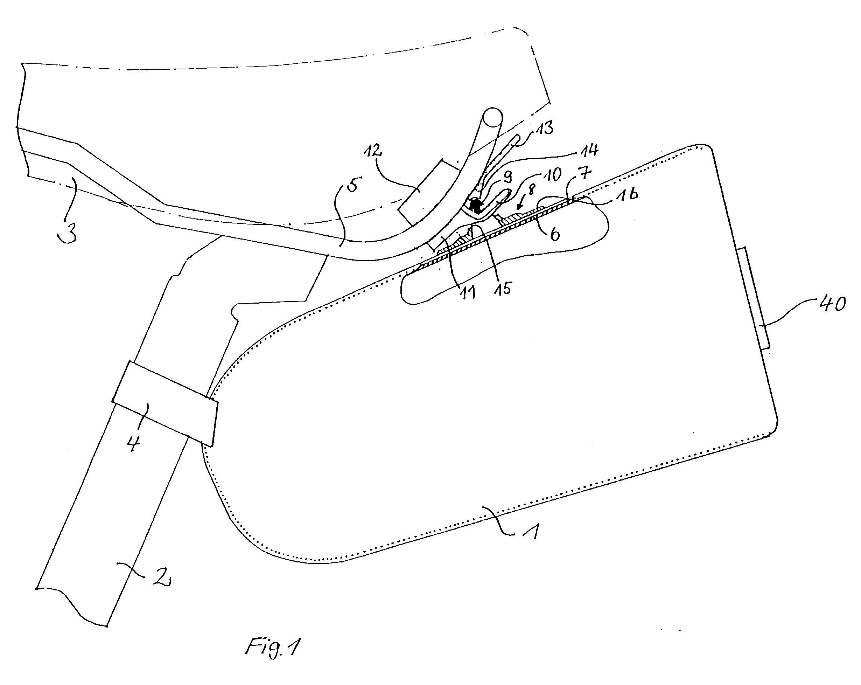

In der Figur 1 ist der Sattel eines Fahrrades mit 3 bezeichnet. Der Sattel ist in an sich bekannter Weise im Sattelrohr 2 eines Fahrrades angeordnet. Die Befestigungseinrichtung, mit deren Hilfe die Satteltasche 1 an den unterhalb des Sattels 3 in der Längsrichtung des Sattels voneinander beabstandet verlaufenden Rahmenteilen 5 des Sattels 3 befestigt wird, besteht aus einem Befestigungsteil 8, das an der Satteltasche 1 befestigt ist und einem Befestigungselement 11, das mit einem Halteteil 12 an den zuvor genannten Rahmenteilen 5 des Sattels 3 befestigt wird.

Das an den Rahmenteilen 5 montierte Befestigungselement 11 der Befestigungseinrichtung weist wenigstens einen, vorzugsweise jedoch in Querrichtung des Sattels 3 zwei oder mehr voneinander beabstandete Hakenteile 10 auf. Entsprechend weist das Befestigungsteil 8 eine bzw. zwei voneinander beabstandete Öffnungen 15 auf, in die die Hakenteile 10 zur Befestigung der Satteltasche 1 am Sattel 3 eingeführt werden. Die Haktenteile 10 bilden einen sich nach oben zum hinteren Ende des Sattels 3 öffnenden Raum. Oberhalb der Öffnungen 15 weist das Befestigungsteil 8 einen in Querrichtung verlaufenden Quersteg 9 auf, der nach dem Einführen der Hakenteile 10 in die Öffnungen 15 in den von den Haktenteilen 10 gebildeten Räumen enthalten ist. Am Befestigungselement 11 ist neben den Hakenteilen 10 ein Hebelteil 13 federnd angeordnet, das beim Einführen der Hakenteile 10 in die Öffnungen 15 an dem Quersteg 9 zur Anlage gelangt und aufgrund seiner federnden Verbindung mit dem Befestigungselement 11 derart ausfedert, daß der Quersteg 9 in eine Schließlage gerät, in der nach dem Zurückfedern des Hebelteiles 13 eine Nase 14 desselben den Quersteg 9 verriegelnd übergreift. Um die Satteltasche 1 vom Sattel entnehmen zu können, ist es lediglich erforderlich, das Hebelteil 13 so zu drücken, daß die Nase 14 den Quersteg 9 freigibt und die Satteltasche nach hinten und oben zu bewegen, so daß der Quersteg 9 aus den Bereich der Hakenteile 10 herausgehoben wird.

Das Befestigungselement 11 wird durch ein Halteteil 12, das mit dem Befestigungselement 11 verschraubbar ist, an den Rahmenteilen 5 gehalten, wobei das Befestigungselement 11 sich an der Unterseite der Rahmenteile 5 befindet und sich in Querrichtung brückenartig über beide Rahmenteile 5 erstreckt und sich das Halteteil 12 an der gegenüberliegenden Seite der Rahmenteile 5 befindet und sich ebenfalls brückenartig über diese Rahmenteile 5 erstreckt. Beim Verschrauben des Befestigungselements 11 und der Halteteiles 12 aneinander werden diese an den Rahmenteilen 5 festgeklemmt.

Es wird darauf hingewiesen, daß das Hebelteil 13 und/oder die Hakenteile 10 auch an dem Halteteil 12 angeordnet sein können.

Die Satteltasche 1 wird an den in Querrichtung voneinander beabstandeten Hakenteilen 10 aufgrund der Bemessung der Öffnungen 15 so gehalten, daß sie sich in Bezug auf den Sattel 3 relativ frei um eine Querachse verschwenken kann. Anders ausgedrückt greifen die Hakenteile 10 in die entsprechend groß bemessenen Öffnungen 15 so ein, daß sich das Befestigungsteil 8 in Bezug auf das Befestigungselement 11 in der vertikalen Ebene um die Querachse relativ frei verschwenken kann. Dadurch wird erreicht, daß im Bereich der Befestigung des Befestigungsteiles 8 an der Satteltasche 1 keine Beschädigungen auftreten können, die darauf zurückzuführen sind, daß die Satteltasche 1 versucht sich aufgrund ihres Gewichtes insbesondere im vollbepackten Zustand bei Bewegungen des Fahrrades in einer Vertikalebene in Bezug auf das Befestigungsteil 8 zu bewegen.

Aus der Figur 1 ist erkennbar, daß die Befestigung des Befestigungsteiles 8 an der Satteltasche 1 vorzugsweise dadurch erfolgt, daß sein plattenförmiges Fußteil 16 an einer die aus Kunststoff bzw. Textil bestehende Satteltasche 1 versteifenden Versteifungswand 6 befestigt, beispielsweise vernäht, vernietet oder verschraubt wird, wobei das flexible Kunststoff- oder Textilmaterial der Satteltasche 1 zwischen der Versteifungswand 6 und dem Fußteil 16 verläuft.

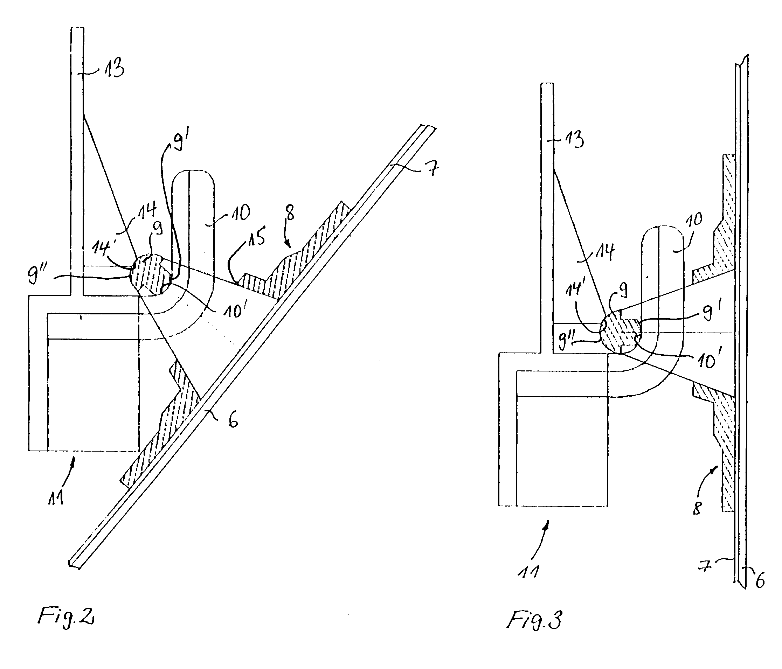

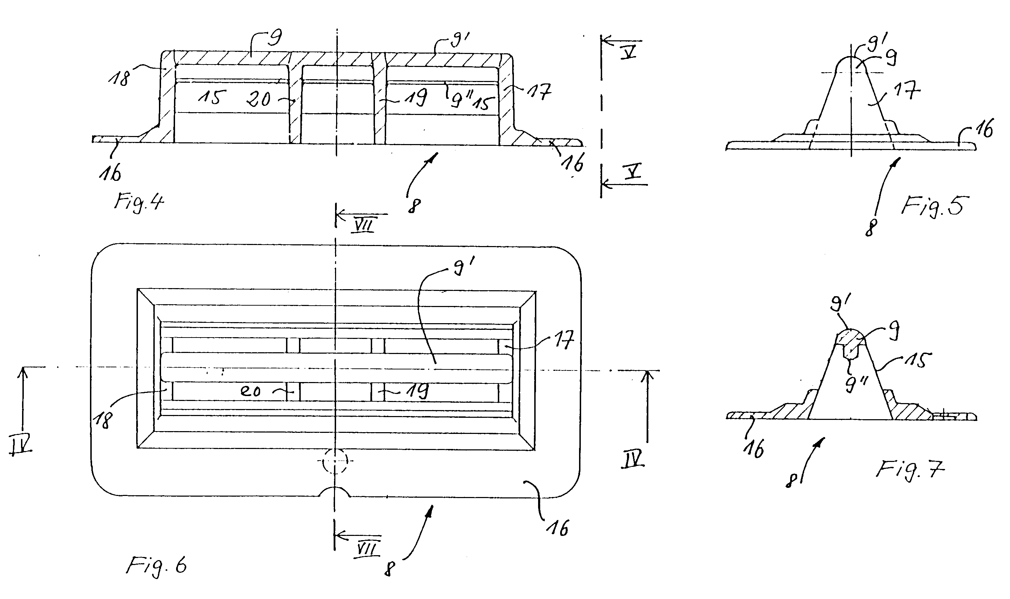

Aus den Figuren 2 und 3 ist ersichtlich, daß die Nase 14 des Hebelteiles 13 vorzugsweise nur mit dem Bereich ihrer Spitze an der ihr zugewandten vorzugsweise kreisförmigen Fläche des Quersteges 9 angreift, wenn die Satteltasche 1 am Sattel 3 befestigt ist, d.h. also wenn die Hakenteile 10 in die Öffnungen 15 des Befestigungsteiles 8 vollständig eingeschoben sind. Der Spitzenbereich der Nase 14 kann an die obere Rundung 9' des Querteiles 9 angepaßt sein. Da die Öffnungen 15 im Vergleich zur Dicke des Hebelteiles 10 relativ groß bemessen sind, kann aufgrund des etwa punktförmigen Angreifens der Nase 14 am Quersteg 9 und aufgrund der Tatsache, daß der Quersteg 9 an seiner dem Hakenteil 10 zugewandten Seite ebenfalls kreisförmig ausgestaltet ist und an die kreisbogenförmige Rundung 10' des Hakenteiles 10 angepaßt ist, sich in der vertikalen Ebene relativ frei verschwenken, so daß es die in den Figuren 2 und 3 gezeigten extremen Positionen einnehmen kann, wobei der Spitzenbereich der Nase 14 auf der Oberfläche des kreisförmigen Quersteges 9 gleiten kann. Durch diese freie Verschwenkbarkeit wird erreicht, daß der Schwerpunkt der bepackten Satteltasche 1 immer in eine definierte Lage unter dem Quersteg 9 gelangt. Es ist auch denkbar, daß der Spitzenbereich der Nase 14 von dem Quersteg 9 im Montagezustand beabstandet ist.

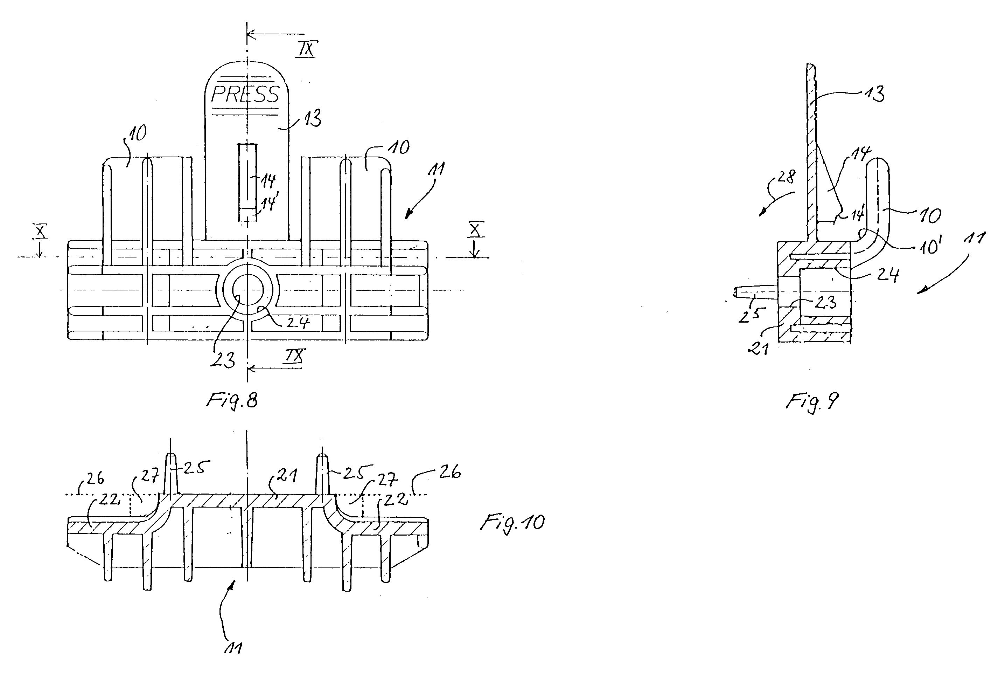

Im Zusammenhang mit den Figuren 4 bis 7 wird nun eine spezielle Ausgestaltung des Befestigungsteiles 8 näher erläutert. Wie bereits beschrieben, weist das Befestigungsteil 8 ein plattenförmiges Fußteil 16 auf, das an der Oberfläche der Satteltasche 1 befestigt wird. Ausgehend vom Fußteil 16 erstrecken sich in Querrichtung gesehen zwei äußere Seitenwände 17 und 18 nach oben, die durch den Quersteg 9 miteinander verbunden sind. Dieser Quersteg 9 weist sowohl an seiner dem Fußteil 16 abgewandten als auch an seiner dem Fußteil 16 zugewandten Seite die bereits erwähnten Rundungen 9' und 9'' auf, die an die entsprechenden komplementären Rundungen 14' der Nase 14 und 10' des Hakenteiles 10 angepaßt sind.

Zur Erhöhung der Steifigkeit können sich ausgehend von dem Fußteil 16 im mittleren Bereich ein oder mehrere, beispielsweise zwei weitere voneinander beabstandete Zwischenwände 19 und 20 zum Quersteg 9 erstrecken. Zwischen der Fußplatte 16 und dem Quersteg 9 befinden sich die Öffnungen 15, die sich in Querrichtung bei der Vorsehung der Zwischenwände 19 und 20 zwischen einer äußeren Seitenwand 17 bzw. 18 und einer Zwischenwand 19 bzw. 20 befinden. Bei Entfall der Wände 19 und 20 verlaufen beide Hakenteile 10 in eine einzige Öffnung 15.

Das Fußteil 16 kann entlang seines Randes nicht dargestellte Löcher zum Vernähen an der Satteltasche 1 oder entsprechende, ebenfalls nicht dargestellte Bohrungen zum Hindurchführen von Schrauben oder Nieten aufweisen.

Im folgenden wird im Zusammenhang mit den Figuren 8 bis 10 eine spezielle Ausgestaltung des Befestigungselements 11 näher erläutert. Es besteht im wesentlichen aus einer Grundplatte, an der die Hakenteile 10 und das Hebelteil 13 befestigt sind. Die Grundplatte weist vorzugsweise einen ersten Bereich 21 auf, der zwischen die beiden Rahmenteile 5, 5 des Sattels 3 eingreift. An jeder Seite grenzt an diesen Bereich 21 ein Außenbereich 22 an, der gegenüber dem Bereich 21 vom Fahrradsattel aus gesehen nach unten versetzt ist und im Montagezustand an der Unterseite der Rahmenteile 5, 5 anliegt. In der Querrichtung gesehen befindet sich in der Mitte des Bereiches 21 eine Bohrung 23, durch die hindurch eine Schraube (nicht dargestellt) zur Befestigung an dem Halteteil 12 geführt werden kann. Ebenfalls in der Querrichtung mittig gesehen ist an der Grundplatte das Hebelteil 13 mit der Nase 14 befestigt. Dabei sind die Stärke und das Material des Hebelteiles 13 so gewählt, daß es in der aus der Figur 9 ersichtlichen Weise federn kann (Pfeil 28). An beiden Seiten des Hebelteiles 13 sind mit dem Bereich 21 bzw. dem Bereich 22 die Hakenteile 10 symmetrisch zur Mitte der Quererstreckung des Befestigungselements 11 befestigt. Im Montagezustand des Befestigungselements 11 verlaufen sowohl das Hebelteil 13 als auch die Hakenteile 10 unter dem rückwärtigen Endbereich des Sattels 2 nach hinten und oben.

An der Bereich 21 sind in Querrichtung voneinander beabstandet an der dem Sattel 3 zugewandten Seite wenigstens zwei vorzugsweise nach oben konisch zulaufende Justiervorsprünge 25 angeordnet, die in entsprechende Justieröffnungen 30 des Halteteiles 12 bei der Befestigungsoperation eingeschoben werden.

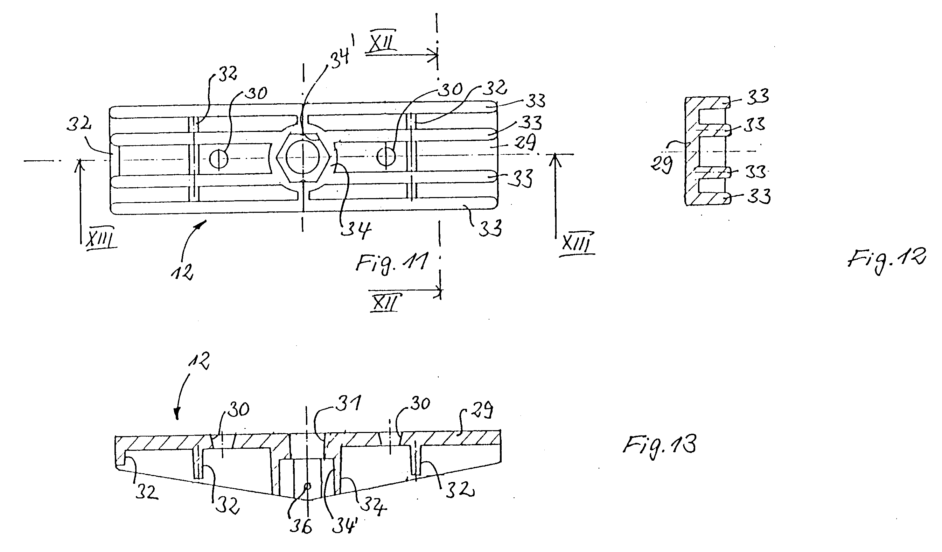

Die Figuren 11 bis 13 zeigen das Halteteil 12, das im wesentlichen eine Grundplatte 29 besitzt, die die den Sattel zugewandte Seite der Rahmenteile 5 überbrückt. In der Grundplatte 29 befinden sich die Öffnungen 30, in die bei der Befestigung des Befestigungselements 11 am Halteteil 12 die Justiervorsprünge 25 des Befestigungsteiles 11 eingeschoben werden. Entsprechend den Justiervorsprüngen 25 sind die Öffnungen 30 konisch ausgestaltet. Die Grundplatte 29 weist mittig eine Öffnung 31 auf, die bei der Montage des Befestigungselements 11 und der Halteteiles 12, d.h. also beim Einführen der Justiervorsprünge 25 in die Öffnungen 30 zur Öffnung 23 des Befestigungselements 11 zur Deckung gelangt. Es kann nun durch die Öffnungen 23 und 25 eine Schraube (nicht dargestellt) eingeführt werden, wobei sich der Kopf der Schraube in dem der Öffnung 23 vorgelagerten Raum 24 des Befestigungselements 11 befindet. An der den Rahmenteilen 5 abgewandten Seite der Grundplatte 29 umgibt die Öffnung 31 eine Wandung 34, die an ihrer Innenseite, d.h. in dem der Öffnung 31 vorgelagerten Raum vorzugsweise der Kontur 34' einer Mutter (nicht dargestellt) angepaßt ist. Dadurch wird erreicht, daß die Mutter automatisch drehfest in den von der Wandung 34 umschlossenen Raum gehalten wird. Durch einen quer durch den von der Wandung 34 umschlossenen Raum verlaufenden Stift 36 (Figur 13), dessen Enden in der Wandung 34 gehalten werden, kann verhindert werden, daß die Mutter 36 aus dem von der Wandung 34 umschlossenen Raum herausfällt. Es sind auch andere Sicherungen, beispielsweise in der Form von der Mutter übergreifenden Schnappvorsprüngen denkbar.

Zur Versteifung des Halteteiles 12 können in Längsrichtung und in Querrichtung verlaufende Versteifungsrippen 32, 33 vorgesehen sein, die teilweise auch einteilig mit der Wandung 34 ausgebildet sind, um diese zu versteifen.

Es kann an der Satteltasche 1 gemäß Figur 1 am vorderen Ende ein die Satteltasche 1 mit dem Sattelrohr 2 verbindendes Band vorgesehen sein, das vorzugsweise durch einen Klettverschluß 4 gebildet wird. Dadurch werden übermäßig große Schwingungen der Satteltasche 1 in der Vertikalebene um den Quersteg 9 verhindert. Solche extremen Bewegungen könnten z.B. bei Fahrten im holprigen Gelände auftreten.

Eine schwingungsdämpfende Wirkung wird erreicht, wenn das Band 4 aus einem elastisch federnden Material, wie beispielsweise einem Gummimaterial, besteht.

In der aus der Figur 1 ersichtlichen Weise, kann an der Rückseite der Satteltasche 1 ein Rückstrahler 40 befestigt sein. Da insbesondere Mountainbikes und Rennräder zumeist keine Schutzbleche besitzen, d.h. also keine guten Befestigungsmöglichkeiten für Rückstrahler bieten, ist dies besonders vorteilhaft. Zudem wird der Rückstrahler 40 verhältnismäßig ruhig gehalten, da die Satteltasche 1 durch die vorliegende Befestgungseinrichtung lediglich Schwingungen um die genannte Querachse ausführt.

## Patentansprüche

1. Befestigungseinrichtung für eine Satteltasche (1) mit einem unter einem Sattel (3) anzuordnenden Befestigungselement (11) und einem damit, zusammenwirkenden weiteren Befestigungsteil (8), das an einer Satteltasche (1) befestigbar ist, dadurch gekennzeichnet, daß das Befestigungselement (11) wenigstens ein Hakenteil (10) aufweist, das einen sich zum Ende des Sattels (3) und zum Sattel hin öffnenden Raum umschließt, in den ein Quersteg (9) des Befestigungsteiles (8) so einsetzbar ist, daß das Befestigungsteil (8) und die damit verbundene Satteltasche (1) Schwenkbewegungen um die durch den Quersteg (9) definierte Achse ausführen können.

2. Befestigungseinrichtung nach Anspruch 1, dadurch gekennzeichnet, daß unterhalb des Quersteges (9) eine Öffnung (15) vorgesehen und so groß bemessen ist, daß die Schwenkbewegungen möglich sind.

3. Befestigungseinrichtung nach Anspruch 1 oder 2, dadurch gekennzeichnet, daß das Hakenteil eine kreisbogenförmige Rundung (10') aufweist, die im Montagezustand das tiefste Gebiet des vom Hakenteil (10) umschlossenen Raumes bildet und an der eine entsprechende kreisbogenförmige Rundung (9'') an der der Satteltasche (1) zugewandten Seite des Quersteges (9) anliegt, wenn die Satteltasche (1) befestigt ist.

4. Befestigungseinrichtung nach einem der Ansprüche 1 bis 3, dadurch gekennzeichnet, daß das Befestigungselement (11) in der Querrichtung voneinander beabstandet zwei Hakenteile (10) aufweist.

5. Befestigungseinrichtung nach einem der Ansprüche 1 bis 4, dadurch gekennzeichnet, daß ein federndes Hebelteil (13) mit einer Nase (14) vorgesehen ist, die in den vom Hakenteil (10) umschlossenen Raum derart ragt, daß sie beim Einsetzen des Quersteges (9) ausfedert und diesen federnd übergreift, wenn der Quersteg (9) in das Haktenteil (10) eingesetzt ist und das Hebelteil (13) in seiner Ausgangslage zurückfedert.

6. Befestigungseinrichtung nach Anspruch 4 und 5, dadurch gekennzeichnet, daß das Hebelteil (13) mittig zwischen den beiden Hakenteilen (10) vorgesehen ist.

7. Befestigungseinrichtung nach Anspruch 5 oder 6, dadurch gekennzeichnet, daß der Spitzenbereich der Nase (14) eine Rundung (14') besitzt, die komplementär zu einer kreisförmigen Rundung (9') ausgebildet ist, die der Quersteg (9) an der ihr zugewandten Seite aufweist, und daß die Rundung (14') der Nase (14) an der Rundung (9') des Quersteges (9) anliegen

8. Befestigungseinrichtung nach einem der Ansprüche 1 bis 7, dadurch gekennzeichnet, daß das weitere Befestigungsteil (8) ein vom Quersteg (9) beabstandetes Fußteil (16) aufweist, das an der Satteltasche (1) befestigbar ist.

9. Befestigungseinrichtung nach einem der Ansprüche 1 bis 8, dadurch gekennzeichnet, daß das Befestigungselement (11) an den in Längsrichtung verlaufenden, voneinander beabstandeten Rahmenteilen (5) des Sattels befestigbar ist.

10. Befestigungseinrichtung nach Anspruch 9, dadurch gekennzeichnet, daß das Befestigungselement (11) ein Halteteil (12) umfaßt, das eine die Rahmenteile (5) an der der Satteltasche (1) abgewandten Seite brückenartig überspannende Grundplatte (29) aufweist, daß das Befestigungselement (11) eine Fußplatte (21, 22) aufweist, die an der der Satteltasche (1) zugewandten Seite der Rahmenteile (5) anliegt, und daß das Halteteil (12) und das Befestigungselement (11) mit der Hilfe einer Verbindungseinrichtung miteinander verbunden sind.

11. Befestigungseinrichtung nach Anspruch 10, dadurch gekennzeichnet, daß die Verbindungseinrichtung die Form einer Schraube aufweist, die durch eine Öffnung (23) des Befestigungselementes (11) und eine deckungsgleich dazu angeordnete Öffnung (31) des Halteteiles (12) verläuft.

12. Befestigungseinrichtung nach Anspruch 11, dadurch gekennzeichnet, daß die Öffnung (31) des Halteteiles (12) an der der Satteltasche (1) abgewandten Seite von einer mit der Grundplatte (29) verbundenen Wandung (34) umgeben ist, die einen Raum (34') zur Aufnahme einer mit der Schraube zusammenwirkenden Mutter umschließt.

13. Befestigungseinrichtung nach Anspruch 12, dadurch gekennzeichnet, daß die Kontur des von der Wandung (34) umschlossenen Raumes der Kontur der Mutter angepaßt, so daß diese im Raum drehfest gehalten wird.

14. Befestigungseinrichtung nach Anspruch 12 oder 13, dadurch gekennzeichnet, daß eine Vorrichtung vorgesehen ist, durch die die Mutter in dem Raum (34') unverlierbar gehalten ist.

15. Befestigungseinrichtung nach einem der Ansprüche 10 bis 14, dadurch gekennzeichnet, daß die Fußplatte (21, 22) einen mittleren Bereich (21) aufweist, der in den Raum zwischen den Rahmenteilen (5) des Sattels (3) soweit eingreift, daß er an der Grundplatte (29) des Halteteiles (12) zur Anlage kommt, wenn das Befestigungsteil (11) am Halteteil (12) befestigt ist.

16. Befestigungseinrichtung nach Anspruch 15, dadurch gekennzeichnet, daß mit dem Bereich (21) oder mit der Grundplatte (29) zwei voneinander beabstandete Justiervorsprünge (25) verbunden sind, die in zwei entsprechende Öffnungen der Grundplatte (29) oder des Bereiches (21) eingreifen.

17. Befestigungseinrichtung nach einem der Ansprüche 1 bis 16, dadurch gekennzeichnet, daß das Befestigungsteil (8) zwei sich von der Fußplatte (16) aus erstreckende, voneinander beabstandete Seitenwände (17, 18) aufweist, die an ihrer dem Fußteil (16) abgewandten Seite durch den Quersteg (9) verbunden sind.

18. Befestigungseinrichtung nach einem der Ansprüche 1 bis 17 in Kombination mit einer Satteltasche, dadurch gekennzeichnet, daß sie ein an der Satteltasche (1) befestigtes Band (4) umfaßt, durch das die Satteltasche (1) an der dem Sattelrohr (2) eines Fahrrades zugewandten Seite mit dem Sattelrohr (2) zur Vermeidung von übermäßig großen Schwingungen der Satteltasche (1) verbunden ist.

19. Befestigungseinrichtung nach Anspruch 18 in Kombination mit einer Satteltasche, dadurch gekennzeichnet, daß als Band (4) ein Klettverschlußband vorgesehen ist.

20. Befestigungseinrichtung nach Anspruch 18 oder 19 in Kombination mit einer Satteltasche, dadurch gekennzeichnet, daß als Band (4) ein elastisch federndes Band vorgesehen ist.

21. Befestigungseinrichtung nach Anspruch 20 in Kombination mit einer Satteltasche, dadurch gekennzeichnet, daß das Band (4) aus einem Gummimaterial besteht.

22. Befestigungseinrichtung nach einem der Ansprüche 1 bis 21, dadurch gekennzeichnet, daß das Befestigungselement (11) und/oder das Befestigungsteil (8) und/oder das Halteteil (12) aus Metall oder Kunststoff bestehen.

23. Befestigungseinrichtung nach einem der Ansprüche 1 bis 22 in Kombination mit einer Satteltasche, dadurch gekennzeichnet, daß die durch sie gehaltene Satteltasche (1) an ihrem rückwärtigen Ende einen Rückstrahler (4O) aufweist.

24. Befestigungseinrichtung nach einem der Ansprüche 10 bis 23, dadurch gekennzeichnet, daß das Hebelteil (13) an dem Befestigungselement (11) oder an dem Halteteil (12) angeordnet ist.

## Claims

1. An attachment device for a saddlebag (1) having an attachment element (11) to be disposed under a saddle (3) and a further attachment part (8) cooperating therewith, which can be attached to a saddle bag (1),
**characterised in that** the attachment element (11) comprises at least one hook part (10), which surrounds a space opening to the end of the saddle (3) and to the saddle, into which a transverse web (9) of the attachment part (8) can be inserted so that the attachment part (8) and the saddle bag (8) connected therewith can perform swivel movements around the axis defined by the transverse web (9).

2. An attachment device according to Claim 1,
**characterised in that** beneath the transverse web (9) an aperture (15) is provided which has large enough dimensions for the swivel movements to be possible.

3. An attachment device according to Claim 1 or 2,
**characterised in that** the hook part comprises a circular rounded portion (10'), which in the assembled state forms the deepest area of the space surrounded by the hook part (10) and against which a corresponding circular rounded portion (9'') abuts at the side of the transverse web (9) turned towards the saddlebag (1) when the saddlebag (1) is attached.

4. An attachment device according to one of Claims 1 to 3,
**characterised in that** the attachment element (11) comprises two hook parts (10) spaced apart in the transverse direction.

5. An attachment device according to one of Claims 1 to 4,
**characterised in that** a resilient lever part (13) having a nose (14) is provided, which projects into the space surrounded by the hook part (10) so that it springs open when the transverse web (9) is inserted and engages resiliently over it when the transverse web (9) is inserted into the hook part (10) and the lever part (13) springs back into it initial position.

6. An attachment device according to Claim 4 and 5,
**characterised in that** the lever part (13) is provided in the middle between the two hook parts (10).

7. An attachment device according to Claim 5 or 6,
**characterised in that** the tip region of the nose (14) has a rounded portion (14'), which complements a circular rounded portion (9') which the transverse web (9) has on the side turned towards it, and in that the rounded portion (14') of the nose (14) can abut the rounded portion (9') of the transverse web (9).

8. An attachment device according to one of Claims 1 to 7,
**characterised in that** the further attachment part (8) comprises a foot part (16), spaced from the transverse web (9), which can be attached to the saddlebag (1).

9. An attachment device according to one of Claims 1 to 8,
**characterised in that** the attachment element (11) can be attached to the frame parts (5) of the saddle which extend in the longitudinal direction and are spaced apart.

10. An attachment device according to Claim 9,
**characterised in that** the attachment element (11) includes a retention part (12), which comprises a base plate (29) spanning the frame parts (5) at the side remote from the saddlebag (1) in the manner of a bridge,
**in that** the attachment element (11) comprises a foot plate (21, 22), which abuts the side of the frame parts (5) close to the saddlebag (1),
**and in that** the retention part (12) and the attachment element (11) are connected to one another by means of a connecting device.

11. An attachment device according to Claim 10,
**characterised in that** the connecting device has the form of a screw, which extends through an aperture (23) in the attachment element (11) and an aperture (31) of the retention part (12) disposed congruent thereto.

12. An attachment device according to Claim 11,
**characterised in that** the aperture (31) in the retention part (12) at the side remote from the saddlebag (1) is surrounded by a wall (34) connected to the baseplate (29), which surrounds a space (34') for housing a nut interacting with the screw.

13. An attachment device according to Claim 12,
**characterised in that** the contour of the space surrounded by the wall (34) is adapted to the contour of the nut, so that said nut is held in a rotationally secure manner in the space.

14. An attachment device according to Claim 12 or 13,
**characterised in that** a device is provided by which the nut is captively retained in the space (34').

15. An attachment device according to one of Claims 10 to 14,
**characterised in that** the footplate (21, 22) comprises a central region (21) which engages in the space between the frame parts (5) of the saddle (3) so that it comes to abut the baseplate (29) of the retention part (12) when the attachment part (11) is attached to the retention part (12).

16. An attachment device according to Claim 15,
**characterised in that** two adjustment protrusions (25) spaced apart are connected to the region (21) or to the baseplate (29) and engage in two corresponding apertures in the baseplate (29) or in the region (21).

17. An attachment device according to one of Claims 1 to 16,
**characterised in that** the attachment part (8) comprises two side walls (17, 18) extending from the footplate (16) and spaced apart, which are connected at their side remote from the foot part (16) by the transverse web (9).

18. An attachment device according to one of Claims 1 to 17 in combination with a saddlebag,
**characterised in that** it comprises a strip (4) attached to the saddlebag (1), by which the saddlebag (1) is connected, at the side close to the seat pillar (2) of a bicycle, with the seat pillar (2) to avoid excessively large oscillations of the saddlebag (1).

19. An attachment device according to Claim 18 in combination with a saddlebag,
**characterised in that** a Velcro strip is used as the strip (4).

20. An attachment device according to Claim 18 or 19 in combination with a saddlebag,
**characterised in that** an elastically resilient strip is provided as the strip (4).

21. An attachment device according to Claim 20 in combination with a saddlebag,
**characterised in that** the strip (4) is made from a rubber material.

22. An attachment device according to one of Claims 1 to 21,
**characterised in that** the attachment element (11) and/or the attachment part (8) and/or the retention part (12) are made from metal or plastic.

23. An attachment device according to one of Claims 1 to 22 in combination with a saddlebag,
**characterised in that** the saddlebag (1) retained thereby comprises a rear reflector (40) at its rear end.

24. An attachment device according to one of Claims 10 to 23,
**characterised in that** the lever part (13) is disposed on the attachment element (11) or on the retention part (12).

## Revendications

1. Dispositif de fixation pour une sacoche (1) de selle comportant un élément de fixation (11) à monter sous une selle (3) et une autre pièce de fixation (8) qui coopère avec ledit élément et peut être fixée sur une sacoche (1) de selle, caractérisé par le fait que l'élément de fixation (11) comprend au moins une pièce formant crochet (10) qui définit un logement ouvert en direction de l'extrémité de la selle (3) et en direction de la selle, dans lequel s'engage une barrette transversale (9) de la pièce de fixation (8) de manière telle que ladite pièce de fixation (8) et la sacoche (1) de selle liée à cette dernière puisse osciller autour de l'axe défini par la barrette (9) transversale.

2. Dispositif de fixation selon la revendication 1, caractérisé par le fait qu'il est prévu en-dessous de la barrette (9) transversale une ouverture (15) qui est dimensionnée de manière à permettre les mouvements d'oscillation.

3. Dispositif de fixation selon la revendication 1 ou la revendication 2, caractérisé par le fait que la pièce formant crochet présente une partie (10') arrondie en arc de cercle qui, en position de montage, constitue la zone la plus profonde du logement défini par la pièce formant crochet (10) et sur laquelle repose une partie (9'') adaptée arrondie en arc de cercle de la face de la barrette (9) transversale tournée vers la sacoche (1) de selle, lorsque ladite sacoche (1) de selle est fixée.

4. Dispositif de fixation selon l'une des revendications 1 à 3, caractérisé par le fait que l'élément de fixation (11) comporte deux pièces formant crochets (10) mutuellement espacées dans la direction transversale.

5. Dispositif de fixation selon l'une des revendications 1 à 4, caractérisé par le fait qu'il est prévu un élément (13) élastique formant levier pourvu d'un nez (14) qui fait saillie dans le logement défini par la pièce formant crochet (10), de manière telle qu'il recule élastiquement lors de l'introduction de la barrette (9) transversale et revient élastiquement sur ladite barrette (9) transversale lorsque celle-ci est insérée dans la pièce formant crochet (10) et que l'élément (13) formant levier a regagné élastiquement sa position d'origine.

6. Dispositif de fixation selon la revendication 4 et la revendication 5, caractérisé par le fait que l'élément (13) formant levier est disposée au centre entre les deux pièces formant crochets (10).

7. Dispositif de fixation selon la revendication 5 ou la revendication 6, caractérisé par le fait que la région de la pointe du nez (14) comporte un arrondi (14') qui est complémentaire d'un arrondi (9') en arc de cercle sur la barrette (9) transversale, côté tourné vers le nez, et par le fait que l'arrondi (14') du nez (14) peut venir en contact avec l'arrondi (9') de la barrette (9) transversale.

8. Dispositif de fixation selon l'une des revendications 1 à 7, caractérisé par le fait que la pièce de fixation (8) supplémentaire comporte une partie pied (16) distante de la barrette (9) transversale qui est fixée sur la sacoche (1) de selle.

9. Dispositif de fixation selon l'une des revendications 1 à 8, caractérisé par le fait que l'élément de fixation (11) peut être fixé sur les parties mutuellement espacées du chariot (5) de la selle qui s'étendent dans la direction longitudinale.

10. Dispositif de fixation selon la revendication 9, caractérisé par le fait que l'élément de fixation (11) comprend une pièce de retenue (12) qui comporte une plaque de base (29) qui relie à la manière d'un pont les parties de chariot (5) du côté éloigné de la sacoche (1) de selle, par le fait que l'élément de fixation présente une embase (21, 22) qui est appliquée contre la face des parties de chariot (5) tournée vers la sacoche (1) de selle et par le fait que la pièce de retenue (12) et l'élément de fixation (11) sont reliés entre eux à l'aide d'un dispositif de liaison.

11. Dispositif de fixation selon la revendication 10, caractérisé par le fait que le dispositif de liaison se présente sous la forme d'une vis qui s'étend à travers une ouverture (23) de l'élément de fixation (11) et une ouverture (31) alignées dans la pièce de retenue (12).

12. Dispositif de fixation selon la revendication 11, caractérisé par le fait que l'ouverture (31) située de la pièce de retenue (12), du côté éloigné de la sacoche (1) de selle, est entourée d'une paroi (34) qui est solidaire de la plaque de base (29) et entoure un espace (34') destiné à recevoir un écrou qui coopère avec la vis.

13. Dispositif de fixation selon la revendication 12, caractérisé par le fait que la forme de la chambre entourée par la paroi (34) est adaptée à la forme de l'écrou, de telle sorte que ce dernier est immobilisé en rotation dans la dite chambre.

14. Dispositif de fixation selon la revendication 12 ou la revendication 13, caractérisé par le fait qu'il est prévu un dispositif au moyen duquel l'écrou est tenu de manière imperdable dans la chambre (34').

15. Dispositif de fixation selon l'une des revendications 10 à 14, caractérisé par le fait que l'embase (21, 22) présente une zone médiane (21) qui pénètre dans l'espace entre les parties de chariot (5) de la selle (3) de manière à venir en appui conte la plaque de base (29) de la pièce de retenue (12) lorsque l'élément de fixation (11) est fixé sur ladite pièce de retenue (12).

16. Dispositif de fixation selon la revendication 15, caractérisé par le fait que deux saillies (25) de réglage distantes l'une de l'autre sont liées à la zone (21) ou à la plaque de base (29) et pénètrent dans deux ouvertures adaptées de ladite plaque de base (29) ou de la zone (21).

17. Dispositif de fixation selon l'une des revendications 1 à 16, caractérisé par le fait que la pièce de fixation (16) présente deux parois latérales (17, 18) mutuellement espacées qui s'étendent à partir de l'embase (16) et sont reliées entre elles, du côté éloigné de l'embase (16), par la barrette (9) transversale.

18. Dispositif de fixation selon l'une des revendications 1 à 17 combiné à une sacoche de selle, caractérisé par le fait qu'il comprend une courroie (4) qui est fixée sur la sacoche (1) de selle et au moyen de laquelle la sacoche (1) de selle est attachée au tube (2) de selle d'une bicyclette, du côté tourné vers le tube (2) de selle, aux fins d'éviter des oscillations trop importantes de la sacoche (1) de selle.

19. Dispositif de fixation selon la revendication 18 combiné à une sacoche de selle, caractérisé par le fait qu'il est prévu comme courroie (4) un ruban auto-aggripant.

20. Dispositif de fixation selon la revendication 18 ou la revendication 19 combiné à une sacoche de selle, caractérisé par le fait qu'il est prévu comme courroie (4) un ruban élastique amortisseur.

21. Dispositif de fixation selon la revendication 20 combiné à une sacoche de selle, caractérisé par le fait que la courroie (4) est en matériau à base de caoutchouc.

22. Dispositif de fixation selon l'une des revendications 1 à 21, caractérisé par le fait que l'élément de fixation (11) et/ou la pièce de fixation (8) et/ou la pièce de retenue (12) est/sont en métal ou en matériau synthétique.

23. Dispositif de fixation selon l'une des revendications 1 à 22 combiné à une sacoche de selle, caractérisé par le fait que la sacoche (1) de selle tenue par ledit dispositif présente un catadioptre (40) à son extrémité arrière.

24. Dispositif de fixation selon l'une des revendications 10 à 23, caractérisé par le fait que l'élément (13) formant levier est disposé sur l'élément de fixation (11) ou sur la pièce de retenue (12).
